(19) Europäisches Patentamt European Patent Office Office européen des brevets

(11) **EP 3 667 956 B1**

(12) **FASCICULE DE BREVET EUROPEEN**

(45) Date de publication et mention de la délivrance du brevet:
**14.07.2021 Bulletin 2021/28**

(51) Int Cl.:
***H04B 15/00*** *(2006.01)*

(21) Numéro de dépôt: **19215782.4**

(22) Date de dépôt: **12.12.2019**

(54) **DISPOSITIF POUR FILTRER DES ÉMISSIONS CONDUITES D'ALIMENTATION**

VORRICHTUNG ZUM FILTERN VON EMISSIONEN AUS VERSORGUNGSLEITUNGUNGEN

DEVICE FOR FILTERING POWER-CONDUCTED EMISSIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2018 FR 1872840**

(43) Date de publication de la demande:
**17.06.2020 Bulletin 2020/25**

(73) Titulaire: **Thales**
**92400 Courbevoie (FR)**

(72) Inventeurs:
• **PELLETIER, Frédéric**
**19311 BRIVE LA GAILLARDE Cedex (FR)**
• **MONTEZIN, Arnaud**
**19311 BRIVE LA GAILLARDE Cedex (FR)**
• **RAYNAL, Olivier**
**19311 BRIVE LA GAILLARDE Cedex (FR)**

(74) Mandataire: **Marks & Clerk France**
**Immeuble "Visium"**
**22, avenue Aristide Briand**
**94117 Arcueil Cedex (FR)**

(56) Documents cités:
**FR-A5- 2 090 890      US-A1- 2011 109 159**
**US-B1- 7 899 415**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif de filtrage des émissions conduites d'alimentation (source et ligne d'alimentation) destiné à être positionné en amont d'un système radio par exemple ou de tout autre équipement générant ce type d'harmoniques de courant.

Le dispositif de filtrage selon l'invention est par exemple utilisé en amont d'une radio fonctionnant en modulation de fréquence AM et/ou en mode Evasion de Fréquence EVF.

L'invention peut aussi être utilisée en amont d'un dispositif pour compenser les variations importantes de courant, appelée « inrush current », lors de la phase de démarrage du dispositif.

Elle s'applique pour filtrer des harmoniques de courant (usuellement de quelques dizaines d'Hertz jusqu'à 10KHz) sur réseau d'alimentation continu ou alternatif redressé.

Pour les alimentations sur réseau continu DC ou alternatif AC redressé, des normes imposent la mise en œuvre de filtres CEM (Compatibilité Electromagnétique). La taille de ce filtre, généralement passif, est d'autant plus importante que les fréquences à filtrer ont de faibles valeurs.

Le problème se pose notamment pour tous les systèmes qui émettent des perturbations de valeurs très supérieures à 100mA à partir de quelques dizaines d'Hertz.

En général, les filtres passifs utilisés pour minimiser ces perturbations, présentent une masse et un encombrement induit très importants.

Pour gagner en masse et en encombrement, il est connu de l'homme du métier d'utiliser une batterie capacitive, ou réserve d'énergie, ayant notamment pour fonction de stocker de l'énergie. L'optimisation de l'énergie stockée par volume de batterie capacitive avec le couple valeur de capacité (C)/tension de charge (V) est obtenue en favorisant la tension de stockage plutôt que la valeur de capacité (E= énergie stockée=½CV$^2$).

Une solution est donnée dans le brevet US7899415. Cette solution utilise deux mesures de courant et une régulation à trois entrées sur la boucle en courant pour annuler les perturbations CEM sur la ligne d'alimentation. Cette solution nécessite d'intervenir en interne à la boucle de courant et à la boucle de tension d'un système, ce qui n'est pas toujours possible.

L'objet de l'invention est de proposer un dispositif de filtrage d'émissions sur un réseau alimenté en courant, positionné en amont d'un système à filtrer, comportant en combinaison au moins les éléments suivants :

- Un module de prélèvement du courant réseau,

- Un module de conversion DC-DC bidirectionnel en puissance,

- Un module de correction générant une tension de consigne transmise à l'organe de commande (Power management) du module de conversion DC-DC pour forcer une charge/décharge de la capacité de réserve d'énergie,

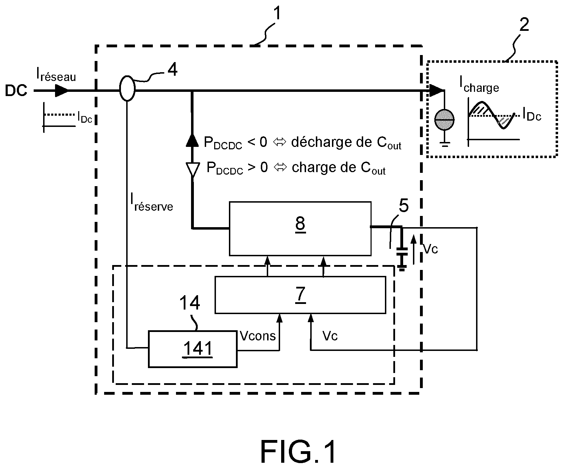

Cette architecture, détaillée à la figure 1, est basée sur une solution en parallèle d'une ligne (source) d'alimentation. Une telle architecture nécessite, en fonctionnement normal, l'utilisation d'une seule mesure de courant pour faire varier le niveau d'énergie dans la capacité constituant une réserve d'énergie, ce qui n'est pas le cas de l'art antérieur.

L'invention concerne un dispositif de filtrage d'émissions sur un réseau alimenté en courant, positionné en amont d'un équipement à protéger, le dispositif de filtrage comporte en combinaison au moins les éléments suivants :

- Un gestionnaire de conversion de type DC-DC bidirectionnel adapté à fournir une valeur de consigne aux bornes d'une capacité réserve d'énergie,

- Un module de prélèvement du courant circulant dans le réseau, configuré pour transmettre ce courant prélevé $I_c$ à un filtre passe-bande adapté à éliminer la composante continue du courant prélevé et borner fréquentiellement la compensation,

- Un soustracteur configuré pour recevoir la composante alternative restante du courant prélevé et une valeur de courant de référence donnée Iref, et adapté à générer un signal d'erreur $S_e$,

- Un module de correction adapté à traiter le signal d'erreur $S_e$ et à générer une valeur de tension $V_{cons}$ correspondante, et à transmettre la valeur de tension d'erreur $V_{cons}$ à un sommateur adapté à recevoir une valeur de tension de référence et une valeur de tension de charge de la réserve d'énergie et à pondérer ces trois valeurs avant de les transmettre à un gestionnaire de composant configuré pour fournir au gestionnaire de conversion bidirectionnel DC-DC des commandes afin que ce dernier applique une tension aux bornes de la capacité réserve d'énergie de façon telle que cette dernière fournisse de l'énergie au réseau ou au contraire prenne de l'énergie au réseau en se

chargeant.

Selon un mode de réalisation, le gestionnaire bidirectionnel DC-DC est configuré pour générer une modulation de largeur d'impulsion pour commander la charge et/ou la décharge de la réserve d'énergie.

Le réseau d'alimentation peut générer une tension continue ou bien être adapté à générer une tension alternative redressée.

Le dispositif est, par exemple, adapté à filtrer des émissions basses fréquences dans la bande [10Hz, 3KHz].

L'invention concerne aussi un système comportant au moins un dispositif de filtrage d'émissions selon l'invention caractérisé en ce qu'il comporte un équipement radio situé en aval du dispositif de filtrage.

L'invention concerne un procédé pour filtrer les émissions conduites au niveau d'un équipement, caractérisé en ce qu'il comporte au moins les étapes suivantes :

- Prélever une partie du courant circulant dans la ligne d'alimentation,

- Eliminer la composante continue dans la partie du courant prélevée et conserver uniquement la partie alternative sur une plage de fréquence de fonctionnement désiré,

- Comparer la valeur de courant alternatif restant à une valeur de courant de référence $I_{ref}$ et générer un signal d'erreur $S_e$,

- A partir de ce signal d'erreur $S_e$, générer une nouvelle valeur de tension de consigne $V_{cons}$ et l'ajouter à une valeur de consigne de charge de la réserve d'énergie et à une valeur de tension de référence, lesdites valeurs étant pondérées, afin de générer une nouvelle valeur de consigne à transmettre à un gestionnaire bidirectionnel DC-DC, ledit gestionnaire bidirectionnel générant une tension appliquée à une capacité réserve d'énergie afin que cette dernière fournisse de l'énergie au réseau ou au contraire prenne de l'énergie au réseau en se chargeant.

Le procédé permet de filtrer des émissions dans les basses fréquences comprises dans la bande [10Hz, 3KHz].

Les dessins annexés illustrent l'invention :

[Fig.1] représente une vue fonctionnelle d'un exemple de filtre d'émissions selon l'invention positionné en amont d'un système radio,

[Fig.2] représente une illustration des variations du courant et des tensions,

[Fig.3] représente un schéma illustrant le principe de fonctionnement du procédé selon l'invention,

[Fig.4A] et [Fig.4B] une illustration de la variation des courants et des tensions lors des charges et décharges de la réserve d'énergie et du pont de résistance,

[Fig.5] un exemple chiffré.

Afin de mieux faire comprendre le dispositif selon l'invention et son fonctionnement, la description qui suit est donnée à titre illustratif et nullement limitatif pour filtrer les émissions basses fréquences CEM sur une ligne d'alimentation (source principale d'alimentation) ayant pour fonction de fournir de la puissance à un système radio. Ceci peut être appliqué pour la protection de tout autre dispositif équivalent générant ces types d'harmoniques de courant.

La figure 1 illustre un exemple de dispositif de filtrage selon l'invention 1 positionné en amont d'un système radio 2 au niveau de l'étage amplificateur radio, non représenté pour des raisons de simplification. Le système pourrait aussi comporter plusieurs étages amplificateurs, chaque étage amplificateur étant relié à une ligne d'alimentation.

Le dispositif de filtrage d'émissions CEM 1 selon l'invention est placé en parallèle d'une ligne alimentation réseau 3 utilisée pour alimenter le système radio 2. Le réseau peut être un réseau de courant continu DC ou un réseau de courant alternatif redressé.

Un premier dispositif de prélèvement 4 connu de l'homme du métier permet de prélever une partie du courant circulant dans la ligne d'alimentation réseau. La partie de courant prélevée va servir notamment à calculer une valeur de consigne à appliquer au niveau d'une réserve d'énergie 5, conduisant à une charge ou une décharge de l'énergie qui permettra de filtrer les émissions. La valeur de consigne est déterminée par un composant de gestion de puissance 7 plus connu sous la dénomination anglo-saxonne « Power Management Component » 7 qui pilote un étage de puissance DC-DC bidirectionnel 8 situé en amont de la réserve d'énergie. Le fonctionnement du composant de gestion de puissance étant connu de l'homme du métier il ne sera pas détaillé.

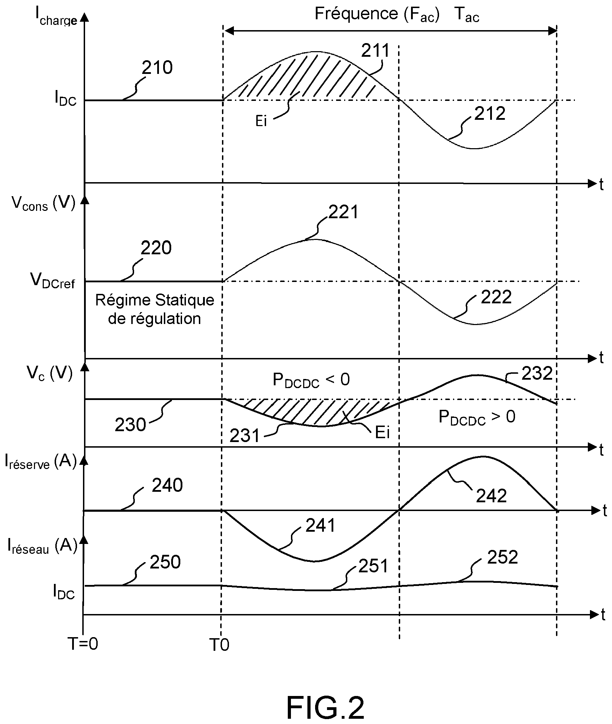

La figure 2 illustre de manière plus détaillée, la variation du courant continu $I_{DC}$ dans la ligne d'alimentation, de la variation de la tension de référence $V_{Cons}(V)$, de la variation de la tension aux bornes de la réserve d'énergie $V_C(V)$, de la variation du courant en entrée de la réserve d'énergie $I_{réserve}(A)$ et de la variation du courant I(A) obtenu par la mise en œuvre du procédé selon l'invention.

L'exemple est donné sur une période temps $T_{ac}$ correspondant à la fréquence $F_{ac}$ du courant alternatif.

Sur la période T= 0 à T0, la ligne d'alimentation n'est pas sollicitée par des variations de courant, les courbes de ces différentes valeurs ne varient pas. La tension de référence $V_{Cons}(V)$ correspond à $V_{DCref}$.

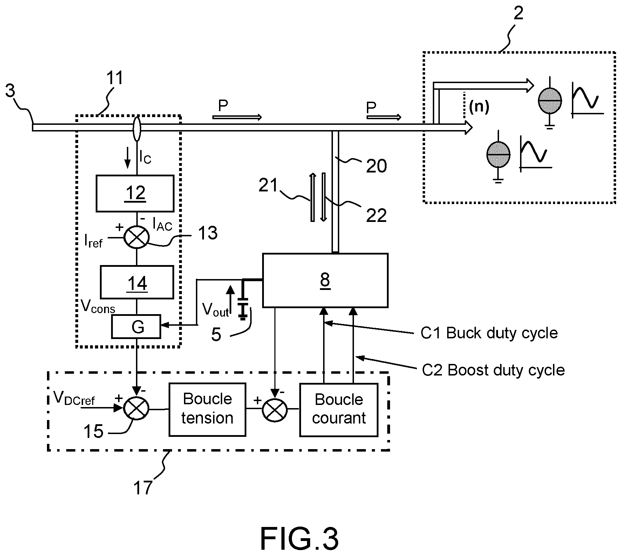

Lors de la première demi-période, dans l'exemple de la figure 3, les alimentations des dispositifs situés en aval de la source de tension génèrent un appel de courant transitoire, 211, par rapport au courant initial 210. La valeur de la tension calculée $V_{cons}(V)$ et transmise au DC-DC bidirectionnel a pour effet technique de simuler une surcharge de la réserve d'énergie, 221, variation par rapport à une valeur initiale 220. La variation de la tension aux bornes de la réserve d'énergie $V_c(V)$ est négative, 230 ; la réserve d'énergie va se décharger dans le réseau, restituant ainsi de la puissance 231 afin de compenser l'appel de courant. Le courant en entrée $I_{réserve}(A)$ de la réserve d'énergie suit la même variation passant d'une valeur initiale 240 à une valeur représentée par la courbe 241. Par contre, le courant du réseau $I_{réseau}(A)$ est pratiquement stable 250, 251, par l'effet de décharge d'énergie, le courant ne subit pas ou peu l'appel de courant transitoire.

Lors de la deuxième demi-période, en cas d'une sous-consommation des alimentations disposées en aval d'un équipement à alimenter, il est nécessaire d'absorber le surplus d'énergie, 212.

Dans ce cas la valeur de la tension calculée et transmise au DC-DC bidirectionnel a pour effet technique de simuler une sous-charge de la réserve d'énergie, 222. La variation de la tension aux bornes de la réserve d'énergie est positive ; la réserve d'énergie va se charger en puisant de la puissance restituée par le réseau d'alimentation, 232. Le courant en entrée de la réserve d'énergie suit la même variation 242. Du fait que la réserve d'énergie se charge du surplus de puissance, le courant du réseau reste quasiment stable, 252.

La figure 3 est un synoptique détaillé du dispositif selon l'invention. Le dispositif de filtrage d'émission selon l'invention comprend une première partie 11 composée d'un filtre passe-bande 12 qui reçoit le courant prélevé $I_c$ de la ligne de puissance. Le filtre passe-bande a notamment pour fonction de supprimer la composante continue DC du courant prélevé et de borner fréquentiellement la plage de fonctionnement du dispositif. La composante AC du courant restante $I_{AC}$ est transmise à un soustracteur 13 qui reçoit une valeur de courant de consigne $I_{Ref}$. En pratique, la valeur du courant de consigne est fixée à la valeur zéro.

Le soustracteur 13 génère un signal d'erreur $S_e$ associé à la valeur de courant. Le signal d'erreur est transmis à un module de correction 14 configuré pour générer une valeur de tension $V_e$ correspondante. Le module de correction comporte par exemple un module supplémentaire 141 pour ajouter un gain statique prenant en compte la variation de la tension dont l'influence est montrée par la relation [2] explicitée ci-après.

Ce module de correction est à minima de type P (Proportionnel). Afin de garantir une erreur statique nulle (Se=0) ainsi qu'un rejet de perturbation aux fréquences supérieures à celles concernées par le filtre actif, il est conseillé d'utiliser une topologie PI (Proportionnel Intégral) à minima. Seule la performance est impactée par le choix de la topologie. Ce module de correction comporte par exemple une dynamique spécifique pour chaque phase de fonctionnement (Pdcdc<0 et Pdcdc>0 de la figure 2).

La valeur de tension $V_e$ est transmise à un bloc gain G qui reçoit aussi le prélèvement de la tension de la capacité de réserve $V_c$. La sortie du bloc gain est transmise au sommateur 15 du composant de gestion de puissance 7 qui intègre également la tension de référence $V_{DCref}$ (pour le régime statique, elle correspond à la consigne de tension moyenne de la réserve).

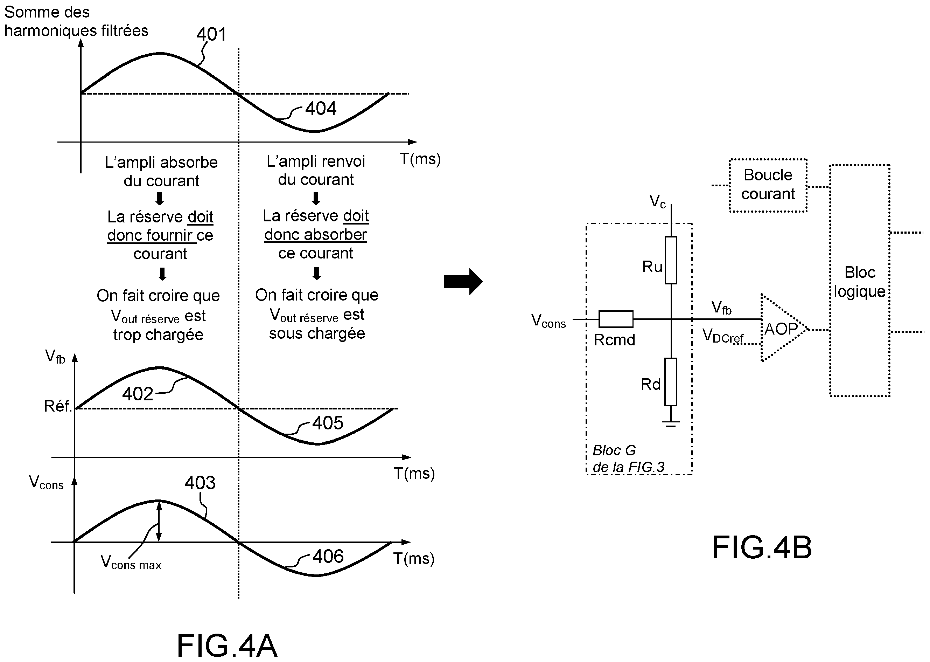

Au niveau de ce sommateur 15, les trois valeurs $V_{cons}$, $V_{DCref}$ et $V_c$ sont pondérées avant d'être sommées, comme il est illustré en référence à la figure 4B explicitée plus loin.

Le calcul de cette pondération s'effectue comme suit :

- Expression de l'ondulation de tension maximale équation [2] à partir de l'équation [1] nécessaire à appliquer sur $V_c$ :

[Math 1]

$$E =< P >* t = \frac{<V_{réseau} \times I_{AC}>}{F_{AC}} = \frac{1}{2} * C_{out} * V_c^2 \quad [1]$$

E = énergie (en Joule),

$< P >$ = puissance moyenne, t= durée considérée,

[Math2]

$$\Delta Vc = k \frac{1}{F_{AC}\sqrt{2C_{out}}} * \sqrt{I_{AC} * V_{reseau}} \qquad [2]$$

Avec :

- *k* une valeur égale à +/- 1 en fonction du sens de l'alternance du courant $I_{AC}$ prélevé,

- $V_{réseau}$ = tension moyenne sur le réseau d'entrée,

- $I_{AC}$ = amplitude maximale du courant modulé que l'on souhaite filtrer,

- $F_{AC}$ = fréquence de(s) harmonique(s) du courant $I_{AC}$.

- $C_{out}$ = volume capacitif de réserve énergie,

- $V_c$ = tension de charge de cette réserve énergie - paramètre qui est modulé par le filtre actif,

- $\Delta Vc$ = Ondulation de la tension de réserve énergie correspondant à l'énergie qu'il faut absorber ou fournir du réseau pour filtrer le courant $I_{AC}$.

Bien que le réseau fluctue au passage d'un courant modulé, on considère ce dernier constant à sa valeur nominale dans l'équation [2] permettant d'obtenir une fonction $\Delta Vc$ = f $(I_{AC})$.

Ceci est illustré à la figure 4A qui illustre dans un diagramme temporel, la variation de la somme des harmoniques de courant filtré.

Dans la première demi-période 401, la boucle de tension absorbe du courant, la réserve d'énergie va fournir ce courant. Pour cela, le gestionnaire de puissance lui fait croire en appliquant une valeur de consigne calculée, que la tension de sortie est trop chargée, 403. A la demi-période suivante, la boucle de tension va retourner du courant et la réserve d'énergie va devoir absorber ce courant, 404. Dans ce cas, le gestionnaire de puissance va faire croire à la réserve d'énergie que sa tension de sortie est trop chargée 405 en appliquant une valeur de consigne appropriée 406.

Pour le calcul des valeurs de résistances, figure 4B, on applique le théorème de MILLMAN, on obtient :

[Math 3]

$$Rd = choix\ arbitraire$$

$$R_u = Rd * \left( \frac{Vc_{statique}}{V_{DCref}} - 1 - \frac{Gain * \Delta Vc}{V_{cc\_max}} \right)$$

$$R_{cmd} = \frac{R_u * V_{cc\_max}}{Gain * \Delta Vc}$$

- *k* une valeur égale à +/- 1 en fonction du sens de l'alternance du courant $I_{AC}$ prélevé,

- Pour le calcul de $(R_u, R_{cmd})$ on considère la fréquence minimale à filtrer,

- $V_{DCref}$ = tension de référence du bloc voltage loop. Valeur intrinsèque au bloc 17,

- $Vc_{statique}$ = tension moyenne de charge de la réserve énergie souhaité quand il n'y a pas de courant modulé,

- *Gain* = Gain statique apporté par toute la chaîne de correction (Mesure courant 4, Correcteur 14, filtre passe bande 12),

- $\varDelta Vc$ = Ondulation de la tension de réserve énergie correspondant à l'énergie qu'il faut absorber ou fournir du réseau pour filtrer le courant $I_{AC}$,

- $V_{cc\_max}$ = tension d'alimentation de l'électronique constituant les blocs 4, 12, 14. Il est conseillé de choisir ±3V pour un rail à ±3.3V afin d'avoir 10% de marge, par exemple, et compenser l'hypothèse menant à la simplification de l'équation [2].

La valeur de consigne $V_{cons}$ est transmise au gestionnaire de composant 7 adapté à déterminer, à partir de cette nouvelle valeur de consigne, les nouveaux ordres de commandes, une commande $C_1$ de rapport cyclique de la cellule Buck et une commande $C_2$ de rapport cyclique de la cellule Boost, ces expressions étant connues de l'homme du métier (usuellement par Modulation de Largeur d'Impulsion) du DC-DC bidirectionnel 8 afin d'orienter dans un sens ou l'autre le transfert d'énergie de la réserve d'énergie vers le réseau d'alimentation ou bien du réseau vers la réserve d'énergie, ainsi que son amplitude (ordre de commande, adaptation de niveaux, signaux modulation, horloge). Une ligne de transmission d'énergie 20 permettra la circulation de l'énergie, correspondant à la charge ou la décharge de la réserve d'énergie.

Le sens de variation de la charge lors de la mise en œuvre du procédé selon l'invention est illustré à la figure 3. La flèche 21 indique que le transfert de puissance va se faire de la réserve de capacité vers le circuit d'alimentation, via la ligne de puissance 20, lorsque le circuit d'alimentation est en surconsommation d'énergie, par exemple, lors du démarrage d'un dispositif à alimenter. La flèche 22 illustre, au contraire, une restitution de la puissance (énergie) qui se trouve en trop dans le circuit d'alimentation à un moment donné.

Les étapes et les modules décrits précédemment peuvent être utilisés dans tout système où l'on cherche à compenser des variations importantes de courant.

Le tableau suivant regroupe un comparatif entre l'utilisation d'un filtre passif et d'un filtre actif selon l'invention :

[Table 1]

|  | Filtre Passif (300Hz - 5kHz) Puissance modulée : 200W | | Filtre Actif selon l'invention (300Hz - 5kHz) Puissance modulée : 500W | |
|---|---|---|---|---|
|  | Volume | Poids | Volume | Poids |
| inductance filtre passif | 170cm$^3$ | 455g | 1.1 cm$^3$ | 6g |
| Capacité filtre passif | 15 cm$^3$ | 66g | 12.2 cm$^3$ | 15.6g |
| DC-DC bidirectionnel (17, 16) | - | - | 44 cm$^3$ * | 74g * |
| Capacité de réserve Energie (20) | - | - | 29 cm$^3$ * | 70g * |
| circuiterie du filtre actif (4, 12, 14) | - | - | 15 cm$^3$ | 10g |
| TOTAL | 185 cm$^3$ | 515 g | 101.3 cm$^3$ | 175.6g |
| Conformité MIL-STD-461G / essai CE101 | KO | | Conforme sur [500Hz - 5kHz] Dépassement limité à 0.1% pour f<500Hz | |
| * Ces données intègrent une autre fonctionnalité pour ce DC-DC justifiant un tel volume. - Réduction de 45% du volume et 65% du poids pour un point de fonctionnement 2.5 fois supérieur (200W à 500W). | | | | |

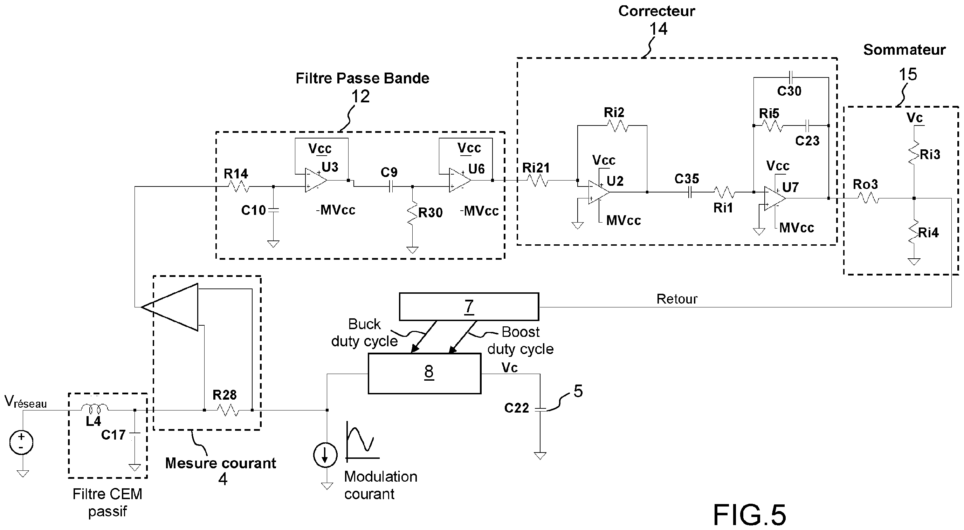

La figure 5 donne un exemple chiffré d'un système présenté aux figures 1 et 3.

L'invention est utilisée pour filtrer les émissions CEM dues au fonctionnement de postes radios, fonctionnement en modulation de fréquence AM ou en évasion de fréquence EVF

Le dispositif selon l'invention offre une fonction de filtrage CEM des émissions conduites basse fréquence avec un encombrement et une masse réduite par rapport aux systèmes connus de l'art antérieur. Elle permet également de réduire l'encombrement et la masse du filtre d'entrée qui était auparavant surdimensionné pour répondre à un objectif de niveau maximum des émissions conduites basses fréquences.

Le dispositif selon l'invention est dimensionné en fonction des harmoniques de courant à filtrer et de la puissance à restituer. La solution ne nécessite pas d'utilisation d'inductance de filtrage de taille importante, mais uniquement un stockage capacitif. Le dispositif selon l'invention présente notamment comme avantage de s'adapter à tout contrôleur PWM standard pour dispositif DC-DC bidirectionnel.]

**Revendications**

1. Dispositif (1) de filtrage d'émissions sur un réseau alimenté en courant, positionné en amont d'un équipement à protéger, le dispositif de filtrage comporte en combinaison au moins les éléments suivants :

   - Un gestionnaire de conversion bidirectionnel DC-DC (8) adapté à fournir une valeur de consigne aux bornes d'une capacité réserve d'énergie (5),
   - Un module de prélèvement du courant (4) circulant dans le réseau, configuré pour transmettre un courant prélevé $I_c$ à un filtre passe-bande (12) adapté à éliminer la composante continue du courant prélevé,
   - Un soustracteur (13) configuré pour recevoir la composante alternative restante du courant prélevé et une valeur de courant de référence donnée Iref, et adapté à générer un signal d'erreur $S_e$,
   - Un module de correction (14) adapté à traiter le signal d'erreur $S_e$ et à générer une valeur de tension $V_{cons}$ correspondante, et à transmettre la valeur de tension d'erreur $V_{cons}$ à un sommateur (15) adapté à recevoir une valeur de tension de référence et une valeur de tension de charge de la réserve d'énergie et à pondérer ces trois valeurs avant de les transmettre à un gestionnaire de composant (7) configuré pour fournir au gestionnaire de conversion bidirectionnel DC-DC (8) des commandes afin que ce dernier applique une tension aux bornes de la capacité réserve d'énergie de façon telle que cette dernière fournisse de l'énergie au réseau ou au contraire prenne de l'énergie au réseau en se chargeant.

2. Dispositif selon la revendication 1 **caractérisé en ce que** le gestionnaire de conversion bidirectionnel DC-DC (8) est configuré pour générer une modulation de largeur d'impulsion pour commander la charge et/ou la décharge de la réserve d'énergie.

3. Dispositif selon la revendication 1 **caractérisé en ce que** le réseau d'alimentation génère une tension continue.

4. Dispositif selon la revendication 1 **caractérisé en ce que** le réseau d'alimentation est adapté à générer une tension alternative redressée.

5. Dispositif selon l'une des revendications 1 à 4 **caractérisé en ce qu'**il est adapté à filtrer des émissions basses fréquences dans la bande [10Hz, 3KHz].

6. Système comportant un dispositif de filtrage d'émissions selon l'une des revendications 1 à 4 **caractérisé en ce qu'**il comporte un équipement radio situé en aval du dispositif de filtrage.

7. Procédé pour filtrer les émissions conduites au niveau d'un équipement positionné en aval d'une ligne d'alimentation (3) en courant, **caractérisé en ce qu'**il comporte au moins les étapes suivantes :

   - Prélever une partie du courant circulant dans la ligne d'alimentation,
   - Eliminer la composante continue dans la partie du courant prélevé et conserver uniquement la partie alternative sur une plage de fréquence de fonctionnement désiré,
   - Comparer la valeur de courant alternatif restant à une valeur de courant de référence $I_{ref}$ et générer un signal d'erreur $S_e$,
   - A partir de ce signal d'erreur $S_e$, générer une nouvelle valeur de tension de consigne $V_{cons}$ et l'ajouter à une valeur de consigne de charge de la réserve d'énergie et à une valeur de tension de référence, lesdites valeurs étant pondérées, afin de générer une nouvelle valeur de consigne à transmettre à un gestionnaire bidirectionnel DC-DC, ledit gestionnaire bidirectionnel générant une tension appliquée à une capacité réserve d'énergie afin que cette dernière fournisse de l'énergie au réseau ou au contraire prenne de l'énergie au réseau en se chargeant.

8. Procédé selon la revendication 7 **caractérisé en ce que** l'on filtre des émissions dans les basses fréquences comprises dans la bande [10Hz, 3KHz].

9. Procédé selon l'une des revendications 7 ou 8 **caractérisé en ce qu'**il utilise un gestionnaire de conversion bidirectionnel DC-DC (8) configuré pour générer une modulation de largeur d'impulsion pour commander la charge et/ou la décharge de la réserve d'énergie

10. Procédé selon l'une des revendications 7 à 9 **caractérisé en ce que** l'on filtre les émissions en amont d'un équipement radio.

**Patentansprüche**

1. Vorrichtung (1) zum Filtern von Emissionen aus einem mit Strom versorgten Netz, welche im vorgelagerten Bereich einer zu schützenden Ausrüstung positioniert ist, wobei die Filtervorrichtung in Kombination mindestens folgende Elemente aufweist:

   - einen bidirektionalen DC-DC-Umwandlungsmanager (8), welcher geeignet ist, einen Sollwert an die Klemmen einer Energiereservekapazität (5) bereitzustellen,
   - ein Entnahme-Modul des in dem Netz zirkulierenden Stroms (4), welches konfiguriert ist, um einen entnommenen Strom $I_c$ an einen Passbandfilter (12) zu übertragen, welcher geeignet ist, die Gleichstromkomponente des entnommenen Stroms zu beseitigen,
   - einen Subtrahierer (13), welcher konfiguriert ist, um die verbleibende Wechselstromkomponente des entnommenen Stroms und einen gegebenen Referenz-Stromwert $I_{ref}$ aufzunehmen, und geeignet ist, ein Fehlersignal $S_e$ zu erzeugen,
   - ein Korrekturmodul (14), welches geeignet ist, das Fehlersignal $S_e$ zu verarbeiten und einen entsprechenden Spannungswert $V_{cons}$ zu erzeugen, und den Fehler-Spannungswert $V_{cons}$ an einen Summierer (15) zu übertragen, welcher geeignet ist, einen Referenz-Spannungswert und einen Ladung-Spannungswert der Energiereserve aufzunehmen und diese drei Werte zu gewichten, bevor er diese an einen Komponentenmanager (7) überträgt, welcher konfiguriert ist, um dem bidirektionalen DC-DC-Umwandlungsmanager (8) Befehle bereitzustellen, damit letzterer eine Spannung an die Klemmen der Reserveenergiekapazität dergestalt anlegt, dass letztere dem Netz Energie bereitstellt oder im Gegenteil Energie vom Netz nimmt, indem sie sich auflädt.

2. Vorrichtung nach Anspruch 1, **dadurch gekennzeichnet, dass** der bidirektionale DC-DC-Umwandlungsmanager (8) konfiguriert ist, um eine Impulsbreitenmodulation zu erzeugen, um die Ladung und/oder die Entladung der Energiereserve zu steuern.

3. Vorrichtung nach Anspruch 1, **dadurch gekennzeichnet, dass** das Versorgungsnetz eine Gleichspannung erzeugt.

4. Vorrichtung nach Anspruch 1, **dadurch gekennzeichnet, dass** das Versorgungsnetz geeignet ist, eine gleichgerichtete Wechselspannung zu erzeugen.

5. Vorrichtung nach einem der Ansprüche 1 bis 4, **dadurch gekennzeichnet, dass** sie geeignet ist, niederfrequente Emissionen in dem Band [10 Hz, 3 kHz] zu filtern.

6. System, aufweisend eine Vorrichtung zum Filtern von Emissionen nach einem der Ansprüche 1 bis 4, **dadurch gekennzeichnet, dass** es eine Funkausrüstung aufweist, welche im nachgelagerten Bereich der Filtervorrichtung angeordnet ist.

7. Verfahren zum Filtern der leitungsgeführten Emissionen einer im vorgelagerten Bereich einer Stromversorgungsleitung (3) angeordneten Ausrüstung, **dadurch gekennzeichnet, dass** es mindestens folgende Schritte umfasst:

   - Entnehmen eines Teils des in der Versorgungsleitung zirkulierenden Stroms,
   - Beseitigen der Gleichstromkomponente in dem entnommenen Teil des Stroms und Beibehalten ausschließlich des Wechselstromteils über einen gewünschten Betriebsfrequenzbereich,
   - Vergleichen des Wertes des verbleibenden Wechselstroms mit einem Referenz-Stromwert $I_{ref}$ und Erzeugen eines Fehlersignals $S_e$,
   - anhand dieses Fehlersignals $S_e$, Erzeugen eines neuen Soll-Spannungswertes $V_{cons}$ und Hinzufügen desselben zu einem Ladungssollwert der Energiereserve und zu einem Referenz-Spannungswert, wobei diese Werte gewichtet werden, um einen neuen an einen bidirektionalen DC-DC-Manager zu übertragenden Sollwert zu erzeugen, wobei der bidirektionale Manager eine Spannung erzeugt, welche an eine Energiereservekapazität angelegt wird, damit letztere dem Netz Energie bereitstellt oder im Gegenteil Energie vom Netz nimmt, indem sie sich auflädt.

8. Verfahren nach Anspruch 7, **dadurch gekennzeichnet, dass** Emissionen in den niedrigen Frequenzen filtert werden, welche in dem Band [10 Hz, 3 kHz] enthalten sind.

9. Verfahren nach Anspruch 7 oder 8, **dadurch gekennzeichnet, dass** es einen bidirektionalen DC-DC-Umwandlungsmanager (8) verwendet, welcher konfiguriert ist, um eine Impulsbreitenmodulation zu erzeugen, um die Ladung und/oder die Entladung der Energiereserve zu steuern.

10. Verfahren nach einem der Ansprüche 7 bis 9, **dadurch gekennzeichnet, dass** die Emissionen im vorgelagerten Bereich einer Funkausrüstung filtert werden.

**Claims**

1. A device (1) for filtering emissions on a network supplied with current, positioned upstream of an apparatus to be protected, the filtering device having at least the following elements in combination:

   - a bidirectional DC-to-DC conversion manager (8) adapted to supply a setpoint value to the terminals of an energy reserve capacitor (5),
   - a module (4) for extracting the current flowing in the network, configured to transmit an extracted current $I_C$ to a bandpass filter (12) adapted to eliminate the DC component of the extracted current,
   - a subtractor (13) configured to receive the remaining AC component of the extracted current and a given reference current value $I_{ref}$, and adapted to generate an error signal $S_e$,
   - a correction module (14) adapted to process the error signal $S_e$ and to generate a corresponding voltage value $V_{cons}$, and to transmit the error voltage value $V_{cons}$ to a summer (15) adapted to receive a reference voltage value and a charging voltage value of the energy reserve and to weight these three values before transmitting them to a component manager (7) configured to provide the bidirectional DC-to-DC conversion manager (8) with commands so that said bidirectional DC-to-DC conversion manager applies a voltage to the terminals of the energy reserve capacitor such that said energy reserve capacitor supplies energy to the network or, by contrast, takes energy from the network by charging itself.

2. The device according to claim 1, **characterized in that** the bidirectional DC-to-DC conversion manager (8) is configured to generate a pulse width modulation in order to control the charging and/or the discharging of the energy reserve.

3. The device according to claim 1, **characterized in that** the power supply network generates a DC voltage.

4. The device according to claim 1, **characterized in that** the power supply network is adapted to generate a rectified AC voltage.

5. The device according to one of claims 1 to 4, **characterized in that** it is adapted to filter low-frequency emissions in the band [10 Hz, 3 kHz].

6. A system having a device for filtering emissions according to one of claims 1 to 4, **characterized in that** it has a radio apparatus located downstream of the filtering device.

7. A method for filtering conducted emissions in an apparatus positioned downstream of a current supply line (3), **characterized in that** it has at least the following steps:

   - extract a portion of the current flowing in the supply line,
   - eliminating the DC component in the extracted portion of the current and retaining only the AC portion over a desired operating frequency range,
   - comparing the remaining AC current value with a reference current value $I_{ref}$ and generating an error signal $S_e$,
   - on the basis of this error signal $S_e$, generating a new setpoint voltage value $V_{cons}$ and adding it to a charging setpoint value of the energy reserve and to a reference voltage value, said values being weighted, to generate a new setpoint value to be transmitted to a bidirectional DC-to-DC manager, said bidirectional manager generating a voltage applied to an energy reserve capacitor so that said energy reserve capacitor supplies energy to the network or, by contrast, takes energy from the network by charging itself.

8. The method according to claim 7, **characterized in that** emissions are filtered in low frequencies comprised within the band [10 Hz, 3 kHz].

9. The method according to one of claims 7 or 8, **characterized in that** it uses a bidirectional DC-to-DC conversion manager (8) configured to generate a pulse width modulation in order to control the charging and/or the discharging of the energy reserve.

10. The method according to one of claims 7 to 9, **characterized in that** the emissions are filtered upstream of a radio apparatus.

$I_{réseau}$

DC

$I_{Dc}$

4

1

2

$I_{charge}$

$I_{Dc}$

$P_{DCDC} < 0 \Leftrightarrow$ décharge de $C_{out}$

$P_{DCDC} > 0 \Leftrightarrow$ charge de $C_{out}$

$I_{réserve}$

8

5

Vc

7

14

141

Vcons

Vc

FIG.1

FIG.2

FIG.3

Somme des harmoniques filtrées

401

404

L'ampli absorbe du courant

↓

La réserve doit donc fournir ce courant

↓

On fait croire que $V_{out\ réserve}$ est trop chargée

L'ampli renvoi du courant

↓

La réserve doit donc absorber ce courant

↓

On fait croire que $V_{out\ réserve}$ est sous chargée

T(ms)

$V_{fb}$

Réf.

402

405

T(ms)

$V_{cons}$

403

$V_{cons\ max}$

406

T(ms)

FIG.4A

$V_c$

Boucle courant

Ru

$V_{cons}$

Rcmd

$V_{fb}$

$V_{DCref}$

AOP

Rd

Bloc logique

Bloc G de la FIG.3

FIG.4B

FIG.5

**EP 3 667 956 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7899415 B